# DEMANDE DE BREVET EUROPEEN

(11) **EP 1 231 395 A1**
(43) Date de publication de la demande: **14.08.2002**
(21) Numéro de dépôt: 02290055.9
(22) Date de dépôt: 10.01.2002
(51) Int. Cl.: F16D 11/14

(54) **Dispositif de transmission de couple**

(30) Priorité: 12.02.2001 FR 0101866
(71) Demandeur: Peugeot Citroen Automobiles SA, 92200 Neuilly sur Seine (FR)
(72) Inventeur: Delporte, Stéphane, 91190 Saint Aubin (FR)
(74) Mandataire: Robert, Jean-François

(57) **Abrégé**

L'invention se rapporte à un dispositif de transmission de couple entre un élément d'entrée (3) et un pignon (1), ledit pignon étant muni de crabots mobiles (8) susceptibles d'être actionnés par un moyen (9) faisant sailli sur ledit élément d'entrée. Selon l'invention, lesdits crabots mobiles sont disposés par paires et agencés de façon que, lorsque le moyen (9) faisant sailli dudit élément d'entrée applique une force sensiblement parallèle à son axe de rotation sur l'un des crabots (8a) d'une paire déplaçant celui-ci dans un sens, l'autre crabot (8b) se déplace dans le sens opposé.

Le dispositif trouve son application notamment dans le milieu des boites de vitesses de véhicules automobiles.

## Description

L'invention se rapporte à un dispositif de transmission de couple à crabots frontaux mobiles en général et plus particulièrement un tel dispositif destiné à équiper les boites de vitesses de véhicules automobiles.

Le principe du crabotage est connu depuis le début du siècle dans le domaine des boites de vitesses pour véhicules automobiles. Un manchon baladeur coulissant sur l'arbre de sortie de la boite de vitesses et tournant avec celui-ci, porte sur ces deux faces une série de dents qui peuvent venir s'engrener avec des dents similaires situées sur la face d'un pignon, qui lui reçoit le couple de l'arbre moteur. En s'engrenant, le pignon et le manchon baladeur deviennent solidaires et permettent la transmission du couple de l'arbre moteur vers l'arbre de sortie au travers de la démultiplication du pignon. Le manchon baladeur possédant une série de dents sur son autre face, il peut ainsi coulisser le long de l'arbre de sortie et venir s'engrener avec un autre pignon recevant lui aussi le couple moteur, mais par une démultiplication différente. Un manchon baladeur permet donc de pouvoir passer deux vitesses différentes.

Il est connu pour les véhicules automobiles à caractère sportif d'utiliser, pour la transmission de couple, des boites de vitesses à crabots frontaux comportant sur le manchon baladeur un nombre moins important de dents que les véhicules de série. En effet, ces dispositifs permettent une grande rapidité de passage et sont extrêmement fiables dans des conditions d'utilisation exigeantes. Cependant, ils sont inadaptés aux véhicules de série car ils ont comme inconvénient un jeu de transmission trop important du fait du large espacement entre chaque crabot. Ainsi, si le jeu de transmission est d'environ un degré dans les véhicules de série, il est en revanche aux alentours de trente degrés pour les véhicules automobiles à caractère sportif.

L'art antérieur jugé le plus proche ne se situe pas dans le domaine technique des véhicules automobiles. En effet, le document EP 0 719 619 A1 nous enseigne une visseuse munie d'un dispositif de transmission de couple à crabots mobiles. Ce dispositif comprend des crabots mobiles, qui montés pivotant dans le pignon recevant le couple, peuvent en opérant une rotation recevoir chacun un des crabots fixes de l'élément d'entraînement de l'outil de la visseuse et former avec eux un contact permanent permettant la transmission du couple. Ce dispositif a, cependant, pour inconvénient de ne prévoir que la phase où la transmission est motrice et donc de ne pas être adapté à un véhicule automobile où la transmission doit pouvoir être motrice ou inhibitrice du mouvement de la caisse.

Le but de la présente invention est de proposer un dispositif de transmission de couple à crabots frontaux ayant un jeu de transmission variant pour permettre l'utilisation dudit dispositif dans les véhicules automobiles de série.

A cet effet, l'invention propose un dispositif de transmission de couple entre un élément d'entrée et un pignon, ledit pignon étant muni de crabots mobiles susceptibles d'être actionnés par un moyen faisant sailli sur ledit élément d'entrée caractérisé en ce que lesdits crabots mobiles sont disposés par paires et agencés de façon que, lorsque le moyen faisant sailli dudit élément d'entrée applique une force sensiblement parallèle à son axe de rotation sur l'un des crabots d'une paire déplaçant celui-ci dans un sens, l'autre crabot se déplace dans le sens opposé.

Le jeu de transmission se trouve ainsi considérablement diminué permettant une réponse immédiate lors d'une phase de réattelage.

Avantageusement, le dispositif est muni de moyens, par exemple basculant, reliant les crabots d'une paire permettant d'associer le mouvement d'un des crabots d'une paire à l'autre.

En outre, le dispositif selon l'invention comprend, avantageusement, une couronne solidarisée au pignon et recevant lesdits crabots mobiles permettant l'adoption de crabots mobiles sur les pignons de type sportif.

Avantageusement, ladite couronne est munie également de crabots fixes entourant les paires de crabots mobiles, l'élément d'entrée comprenant aussi des crabots fixes chacun susceptible de coopérer avec ladite couronne pour transmettre le couple soit directement par ses crabots fixes soit par l'intermédiaire d'un des crabots mobiles d'une paire.

Le dispositif qui vient d'être décrit est avantageusement monté dans une boite de vitesses de véhicule automobile.

D'autres particularités et avantages apparaîtront à la lecture de la description ci-après faite en référence aux figures dans lesquelles :
- la figure 1 représente une vue éclatée d'un dispositif de transmission de couple selon l'invention ;
- la figure 2 est une vue en perspective lorsque le dispositif selon l'invention est en position débrayée ;
- la figure 3 représente une vue de gauche lorsque le dispositif selon l'invention est en position embrayée. Les crabots fixes de la couronne servant à transmettre le couple ;
- la figure 4 représente une vue de droite lorsque le dispositif selon l'invention est en position embrayée. Les crabots mobiles de la couronne servant à transmettre le couple.

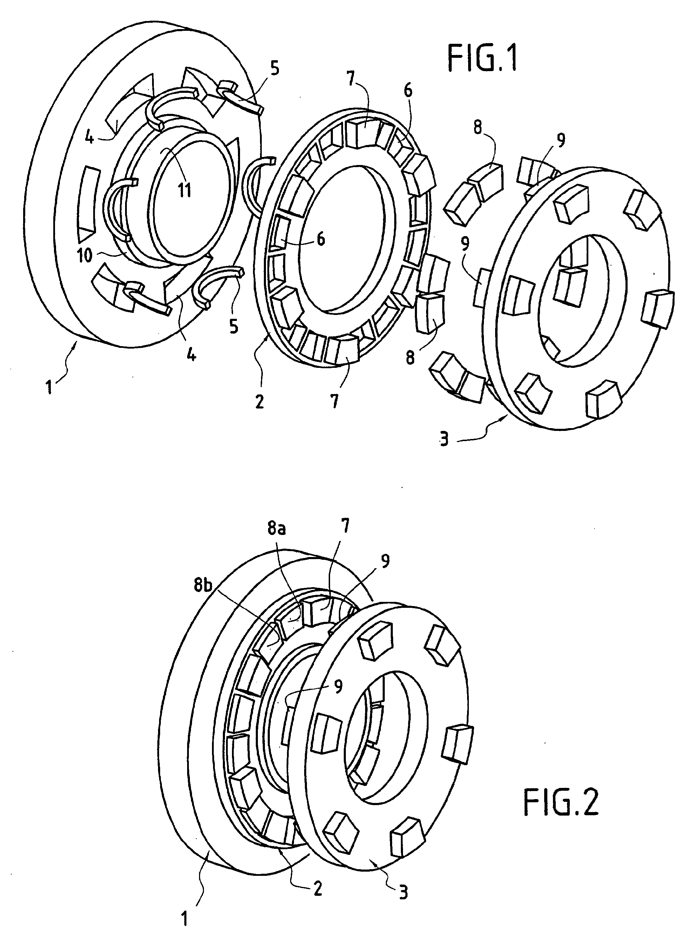

Le dispositif de transmission du couple selon l'invention représenté sur la figure 1 est destiné à être monté préférentiellement sur un arbre d'entraînement (non représenté) d'une boite de vitesses d'un véhicule automobile.

Dans l'exemple illustré à la figure 1, un pignon (1) est de forme annulaire. Entre son diamètre intérieur et extérieur sont creusés six logements (4) similaires disposés en arc de cercle de même rayon. Le pignon (1) contient, sur la même face que les logements (4), sensiblement autour de son diamètre intérieur deux bagues (10, 11) cylindriques. La première de ces bagues (10), accolée au pignon (1), a le même diamètre intérieur que ledit pignon. La deuxième de ces bagues (11), accolée à la première bague (10), a également le même diamètre intérieur, par contre elle possède un diamètre extérieur inférieur à celui de la première bague (10). De plus, la hauteur de la deuxième bague (11) cylindrique est considérablement plus grande que celui de la première (10). Le diamètre intérieur du pignon (1) prolongé par ces deux bagues (10, 11) est apte à recevoir un arbre cylindrique comme par exemple l'arbre moteur ou l'arbre de sortie d'une boite de vitesse de véhicule automobile.

La couronne (2) est aussi de forme annulaire, son diamètre intérieur étant sensiblement égal au diamètre extérieur de la première bague (10) du pignon (1). Sensiblement à la périphérie d'une de ses faces, elle comporte six crabots fixes (7) espacés à équidistance les uns des autres. Dans chaque intervalle constitué entre deux de ces crabots fixes (7) sont présents deux évidements (6) similaires en arc de cercle et traversant la couronne (2) de part en part. Cette dernière contient ainsi, dans l'exemple illustré à la figure 1, douze évidements (6) disposés par paire, chacune des paires étant disposés entre deux crabots fixes (7).

Un manchon de crabotage (3) est de forme annulaire, son diamètre intérieur étant supérieur au diamètre extérieur de la deuxième bague (11) du pignon (1). Sur chacune de ces deux faces, le manchon de crabotage (3) comporte six crabots similaires (9) placés à équidistance les uns des autres sur sensiblement le même rayon.

Selon l'invention, le dispositif comprend six basculeurs (5) sensiblement en forme de U chacun monté pivotant dans un logement (4) associé du pignon (1). Les deux extrémités de chacun de ces basculeurs (5) étant pointées vers l'extérieur du logement (4) associé.

Le dispositif comprend en outre selon l'invention douze crabots mobiles sensiblement parallélépipédiques (8) contenus respectivement dans chaque évidement (6) de la couronne (2). Ils sont donc chacun disposés par paire non jointivement sensiblement sur la périphérie de la couronne (2) entre deux crabots fixes de la couronne (2). Ils peuvent ainsi se déplacer parallèlement à l'axe de rotation de la couronne (2). Les deux faces parallèles de chaque crabot mobile (8) qui ne sont pas entourées par la couronne (2) ont pour vis-à-vis, pour l'une, une des deux extrémités d'un basculeur (5) contenus dans un des logements (4) du pignon (1) et pour l'autre, le manchon de crabotage (3).

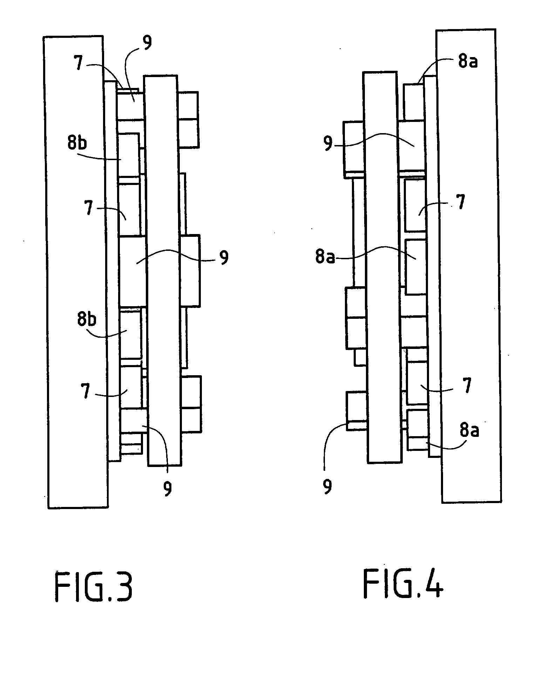

Selon l'invention, chacun des six basculeurs (5) est monté sur pivot au niveau du sommet de sa forme en U dans un des six logements (4) du pignon (1). La couronne (2) est ensuite solidarisée, par exemple par soudure, au pignon (1) en prenant garde de faire correspondre chaque logement (4) à une paire d'évidements (6) de la couronne (2) contenant chacun deux crabots mobiles (8). Le diamètre intérieur de la couronne (2) vient correspondre avec le diamètre extérieur de la première bague (10) du pignon (1). Chaque face de chaque crabot mobile (8), qui était avant en vis-à-vis avec une extrémité d'un basculeur (5), coopère désormais avec elle. Le résultat de la solidarisation de la couronne (2) au pignon (1) est illustré à la figure 2 avec, sur le même axe de rotation, le manchon de crabotage (3).

Dans l'exemple illustré à la figure 2, le dispositif est dans la situation où le manchon de crabotage (3) n'est pas engrené sur la couronne (2). On voit alors les paires de crabots mobiles (8a, 8b) dans leur position d'équilibre. Ils sont tous à la même hauteur par rapport à l'axe de rotation du pignon (1). Cette position d'équilibre correspondant à une assiette parallèle, par rapport aux deux crabots mobiles (8a, 8b) de la paire, des deux extrémités du basculeur associé (non représenté).

Dans l'exemple illustré à la figure 2, le pignon (1) est monté fou sur l'arbre de sortie (non représenté) d'une boite de vitesses. Le manchon de crabotage (3) est solidaire en rotation dudit arbre de sortie mais peut coulisser le long de ce même arbre. Lorsque le conducteur du véhicule engage une vitesse la manchon de crabotage (3) coulisse le long de l'arbre vers le pignon (1) qui, recevant le couple de l'arbre moteur, est en rotation. Lors du rapprochement du manchon de crabotage (3), chacun des premiers ou deuxièmes crabots mobiles (8a ou 8b) d'une paire est poussé, par un des crabots fixes (9) du manchon de crabotage (3), à travers un évidemment (6) de la couronne (2) vers les logements (4) contenus dans le pignon (1). Grâce aux basculeurs (voir figure 1) associés à chaque paire de crabots mobiles, le mouvement d'un de ces derniers (par exemple 8a) est transmis en sens opposé (c'est-à-dire vers le manchon (3)) à l'autre crabot mobile (8b).

Comme il est représenté sur la figure 3, chaque crabot fixe (9) du manchon de crabotage (3) se retrouve donc emprisonné entre un crabot mobile (8b) et un crabot fixe (7) de la couronne (2). L'ensemble pignon (1)/couronne (2) et le manchon de crabotage (3) étant alors obligés de se suivre mutuellement, permettant la transmission de couple.

Avantageusement selon l'invention, pour une rotation mutuelle du bas vers le haut, le couple peut être transmis par les crabots fixes (7 sur la figure 3) ou par les premiers ou deuxièmes crabots mobiles (8a sur la figure 4) de chaque paire (8) de la couronne (2). Le large jeu de transmission entre deux crabots fixes (7) de la couronne (2) permet d'engrener très rapidement ceux-ci aux crabots fixes (9) du manchon de crabotage (3). Les passages de vitesses sont donc très rapides. Grâce au dispositif selon l'invention, le jeu de transmission est réduit après l'engrènement de façon à emprisonner les crabots fixes (9) du manchon de crabotage (3) (voir figures 3 et 4) pour proposer un réattelage (moment où la transmission passe de la phase motrice vers la phase inhibitrice de la caisse ou inversement) adapté pour les véhicules de série.

Bien entendu, cette invention ne se limite pas aux boites de vitesses de véhicules automobiles, elle peut être mise en oeuvre pour toute transmission de couple utilisant des crabots frontaux. Les crabots mobiles ne sont pas limités à une forme sensiblement parallélépipédique, en effet selon l'invention, ils peuvent être de formes différentes comme par exemple trapézoïdales. Enfin, on peut rajouter que l'arbre cylindrique passant par les diamètres intérieurs du pignon (1), de la couronne (2) et du manchon de crabotage (3) peut être aussi bien l'arbre moteur que l'arbre de sortie.

## Revendications

1. Dispositif de transmission de couple entre un élément d'entrée (3) et un pignon (1), ledit pignon étant muni de crabots mobiles (8) susceptibles d'être actionnés par un moyen (9) faisant sailli sur ledit élément d'entrée **caractérisé en ce que** lesdits crabots mobiles sont disposés par paires et agencés de façon que, lorsque le moyen (9) faisant sailli dudit élément d'entrée applique une force sensiblement parallèle à son axe de rotation sur l'un des crabots (8a) d'une paire déplaçant celui-ci dans un sens, l'autre crabot (8b) se déplace dans le sens opposé.

2. Dispositif selon la revendication 1, **caractérisé en ce qu'**il est muni, de plus, de moyens (5) reliant les crabots d'une paire.

3. Dispositif selon la revendication 2, **caractérisé en ce que** lesdits moyens reliant les crabots d'une paire comprennent chacun un élément basculant.

4. Dispositif selon la revendication 3, **caractérisé en ce que** chaque élément basculant est en forme de U et disposé à l'intérieur d'un logement (4) situé dans le pignon.

5. Dispositif selon l'une des revendications précédentes, **caractérisé en ce qu'**il comprend, de plus, une couronne (2) solidarisée au pignon (1) et recevant lesdits crabots mobiles.

6. Dispositif selon la revendication 5, **caractérisé en ce que** la couronne (2) est munie également de crabots fixes (7) entourant les paires de crabots mobiles (8), l'élément d'entrée (3) comprenant aussi des crabots fixes (9) chacun susceptible de coopérer avec ladite couronne pour transmettre le couple soit directement par ses crabots fixes (7) soit par l'intermédiaire d'un des crabots mobiles (8) d'une paire.

7. Boite de vitesses pour véhicule automobile comprenant le dispositif de transmission de couple selon l'une des revendications précédentes.
